# EUROPÄISCHE PATENTSCHRIFT

(11) **EP 4 622 042 B1**
(45) Veröffentlichungstag und Bekanntmachung des Hinweises auf die Patenterteilung: **03.12.2025**
(21) Anmeldenummer: 24165074.6
(22) Anmeldetag: 21.03.2024
(51) Int. Cl.: H02J 7/00, H02J 50/10, H02J 50/00

(54) **INDUKTIVES LADEGERÄT, ANORDNUNG UMFASSEND EINE USB-STECKDOSE UND EIN SOLCHES, SOWIE VERFAHREN ZUM INDUKTIVEN LADEN EINES ENDGERÄTES**
INDUCTIVE CHARGING DEVICE, ARRANGEMENT COMPRISING A USB SOCKET AND A USB SOCKET, AND METHOD FOR INDUCTIVELY CHARGING A TERMINAL
CHARGEUR INDUCTIF, ENSEMBLE COMPRENANT UNE PRISE USB ET UN TEL CHARGEUR INDUCTIF D'UN TERMINAL

(43) Veröffentlichungstag der Anmeldung: 24.09.2025
(73) Patentinhaber: Albrecht Jung GmbH & Co. KG, 58579 Schalksmühle (DE)
(72) Erfinder: Biniossek, Nik, 58099 Hagen (DE)

(56) Entgegenhaltungen:
- WO-A1-2020/180749
- DE-U1- 202022 001 184
- US-A1- 2022 113 762
- US-A1- 2023 187 951

## Beschreibung

Die Erfindung betrifft eine Anordnung umfassend mindestens eine einen USB-Anschluss aufweisende USB-Steckdose sowie ein induktives Ladegerät zum Laden eines mobilen Endgerätes umfassend eine Ladespule, die hinter einer auf der Vorderseite des induktiven Ladegerätes angeordneten Ladeplatte angeordnet ist, einen elektrischen Anschluss zum Anschluss an eine Energieversorgung sowie einen Haltemagneten zum Halten eines mobilen Endgerätes parallel zu einer Wand- und/oder Möbeloberfläche, wobei der elektrische Anschluss des induktiven Ladegerätes als ein kabelloser, an die Rückseite des induktiven Ladegerätes angeformter Stecker zum Einstecken in eine einen USB-Anschluss aufweisende USB-Steckdose ausgeführt ist, wobei der Stecker als USB-Stecker ausgeführt ist.

Ferner betrifft die Erfindung ein Verfahren zum induktiven Laden eines mobilen Endgerätes mit der erfindungsgemäßen Anordnung.

Klassische, unter dem Produktnamen beziehungsweise der Marke MagSafe ^{®} vorbekannte, induktive Ladegeräte weisen zum Laden eines mobilen Endgerätes eine Ladespule, die hinter einer auf der Vorderseite des induktiven Ladegerätes angeordneten Ladeplatte angeordnet ist, einen elektrischen Anschluss zum Anschluss an eine Energieversorgung sowie einen Haltemagneten zum Halten eines mobilen Endgerätes auf (*www.apple.com*/*de*/*shop*/*product*/*MHXH3ZM*/*A*/*magsafe-ladegerät?fnode=29611cce37f8e0f1f08e4d5d14d01deb871baad43ad21b7 df6c4ccb5d331efbb6ad88290dd94bd8df05c792cdcbff1 1bF7f2c472a68766 3655b 127bc778ceaf27bd64b4d7c766633f3f96b 12bd1f7277654d4165481 2212293cf39021afe1c200400101449bf5b465ef11b54054c892cabdd7d42 40dd636453bcc17583988594).*

Problematisch bei diesen Lösungen ist, dass sie ein separates Netzteil und ein entsprechendes Ladekabel zum Verbinden des Netzteils und Ladeelektronik erfordern. Derartige Ladekabel stehen im Widerspruch zum "wireless charging", da statt des mobilen Endgerätes ein Kabel an das Ladegerät angeschlossen werden muss. Insofern ist die Handhabung durch ein erforderliches Ladekabel erschwert. Zum Anbringen des induktiven Ladegerätes, insbesondere des sogenannten MagSafe ^{®}, sind auch Wandhalterungen bekannt. Hierdurch wird jedoch das Kabel nicht entbehrlich, sondern hängt auffällig an der Wand zu einer Steckdose oder muss durch optisch auffällige Maßnahmen versteckt/verkleidet werden, so dass der ästhetische Gesamteindruck beeinträchtig wird.

Alternativ sind induktive Ladegeräte zum Laden eines mobilen Endgerätes bekannt, die in eine Installationsdose montiert werden können, beispielsweise aus EP 3 826 279 B1. Nachteilig dabei ist, dass diese eine enorme Installationshürde aufweisen, da entweder eine Installationsdose installiert werden muss oder bestehende Geräte ausgebaut und gegen das induktive Ladegerät getauscht werden müssen. Damit ist auch der Einsatzort des induktiven Ladegerätes nicht mehr flexibel.

Eine gattungsgemäße Anordnung gemäß des Oberbegriffes des Hauptanspruches 1 wird in US 2022/0113762 A1 offenbart.

Aus WO 2020/180749 A1 ist ein induktiver, faltbarer Ladeadapter zum Laden einer elektronischen Uhr vorbekannt.

US 2023/0187951 A1 offenbart ein induktives Ladegerät für eine elektrische Zahnbürste.

Das Gebrauchsmuster DE 20 2022 001 184 U1 offenbart ein mobiles Ladegerät mit einer Batterie, die bei Auslieferung bereits zu 100% geladen ist, um ein mobiles Endgerät zu laden.

Ausgehend von diesem diskutierten Stand der Technik liegt der Erfindung die Aufgabe zugrunde, eine Anordnung umfassend mindestens eine einen USB-Anschluss aufweisende USB-Steckdose sowie ein induktives Ladegerät zum Laden eines mobilen Endgerätes zu schaffen, die es ermöglicht, ein echtes "wireless charging" - Erlebnis zu ermöglichen; mithin ohne Kabel auskommt, gleichzeitig besonders einfach mit einer Hand flexibel zu installieren ist und es optisch besonders kompakt und unauffällig ermöglicht, ein mobiles Endgerät parallel zu einer Wand- und/oder Möbeloberfläche zu laden.

Gelöst wird diese Aufgabe durch eine Anordnung gemäß Hauptanspruch 1.

Ein solches erfindungsgemäßes induktives Ladegerät einer erfindungsgemäßen Anordnung zum Laden eines mobilen Endgerätes umfasst eine Ladespule, die hinter einer auf der Vorderseite des induktiven Ladegerätes angeordneten Ladeplatte angeordnet ist, sowie einen Haltemagneten (regelmäßig ringförmig oder zumindest teilweise ringförmig ausgebildet) zum Halten eines mobilen Endgerätes parallel zu einer Wand- und/oder Möbeloberfläche. Zum elektrischen Anschluss an eine Energieversorgung weist das induktive Ladegerät einen kabellosen, an die Rückseite des induktiven Ladegerätes angeformten Stecker zum Einstecken in eine einen USB-Anschluss aufweisende USB-Steckdose auf, wobei der Stecker als USB-Stecker ausgeführt ist.

Besonders geschickt bei dem erfindungsgemäßen Ladegerät der erfindungsgemäßen Anordnung ist, dass dieses ein besonders flaches Design ermöglicht, das sich unauffällig in die bestehende Optik des Installationsgerätedesign einfügt, indem das erfindungsgemäße Ladegerät von dem Umstand Gebrauch macht, dass die Kopplung mit einer USB-Steckdose erfolgt. Eine USB-Steckdose weist bereits die erforderlichen Netzteilkomponenten im Sockel auf, so dass das Ladegerät besonders flach ausgeführt werden kann.

Insofern wird besonders intelligent bei dem erfindungsgemäßen induktiven Ladegerät der erfindungsgemäßen Anordnung ein kabelloser, an die Rückseite des induktiven Ladegerätes angeformter USB-Stecker zum Einstecken in eine USB-Steckdose genutzt. Der kabellose Stecker ist dabei direkt an die Rückseite des induktiven Ladegerätes angeformt, so dass kein unerwünschtes Kabel erforderlich ist. Gleichzeitig erlaubt das erfindungsgemäße induktive Ladegerät vorteilhafterweise hierdurch eine besonders flexible Nutzung an jedweder USB-Steckdose, und zwar durch eine einzelne Hand mit einem einzigen Handgriff: Zur Installation des induktiven Ladegerätes muss dieses mit seinem USB-Stecker lediglich in den USB-Anschluss der USB-Steckdose eingesteckt werden. Insbesondere entfällt ein Anschluss eines Netzteils an eine Steckdose via Stecker, sowie der Anschluss eines Netzteils an eine induktive Ladestation via Ladekabel. Damit wird die Installation deutlich vereinfacht. Auch ist im Gegensatz zu vorbekannten induktiven Ladegeräten, die in eine Installationsdose montiert werden, die Installationshürde substantiell abgesenkt und die Flexibilität deutlich verbessert.

Ein erfindungsgemäßes induktives Ladegerät der erfindungsgemäßen Anordnung zum Laden eines mobilen Endgerätes weist dabei in einer besonders bevorzugten Ausgestaltung einen USB-Stecker auf, der als USB-C oder als USB-A-Stecker ausgeführt ist.

In einer bevorzugten Ausführungsform des erfindungsgemäßen induktiven Ladegerätes der erfindungsgemäßen Anordnung weist dieses eine Zentralplatte auf, wobei die Zentralplatte anstatt einer Zentralplatte der USB-Steckdose in einen Einsatz der USB-Steckdose eingesetzt ist. Hierdurch wird zusätzlich Bauraum für das induktive Ladegerät bereitgestellt.

In einer alternativen bevorzugten Ausführungsform des erfindungsgemäßen induktiven Ladegerätes der erfindungsgemäßen Anordnung kontaktiert das Ladegerät eine Zentralplatte der USB-Steckdose. Dabei werden die Kosten reduziert, indem die bestehende Zentralplatte der USB-Steckdose erhalten bleibt und das Ladegerät auf diese Zentralplatte der USB-Steckdose aufgesetzt ist. In einer Weiterbildung dieser Ausführungsform weist das erfindungsgemäße Ladegerät eine Zentralplatte auf, wobei die Zentralplatte des Ladegerätes die USB-Steckdose kontaktiert.

In einer bevorzugten Ausführungsform des erfindungsgemäßen induktiven Ladegerätes der erfindungsgemäßen Anordnung weist die Ladeplatte einen USB-Anschluss auf, der mit dem USB-Anschluss der USB-Steckdose verbunden ist. Damit wird nicht nur ein kabelloses Laden ermöglicht, sondern auch ein kabelgebundenes Laden, beispielsweise um den Bedienkomfort während des Ladevorgangs zu erhöhen. Eine Demontage des erfindungsgemäßen induktiven Ladegerätes ist dazu nicht erforderlich.

In einer Ausführungsform des erfindungsgemäßen induktiven Ladegerätes der erfindungsgemäßen Anordnung ist der USB-Stecker des Ladegerätes bezüglich seiner Position auf der Rückseite des Ladegerätes zur Erhöhung der Passgenauigkeit des Ladegerätes mit unterschiedlichen USB-Steckdosen variabel, beispielsweise über einen flexiblen Leiter, angeordnet.

Erfindungsgemäß weist das induktive Ladegerät der erfindungsgemäßen Anordnung an seiner Rückseite einen Halteabsatz auf, der zum Einsetzen in die topfförmige, zylindrische Vertiefung der USB-Steckdose geeignet ist, um die Haltekraft des Halteabsatz an einer topfförmigen, zylindrischen Vertiefung der USB-Steckdose zu erhöhen, wobei der Halteabsatz insbesondere elastische Elemente aufweist, die die topfförmige, zylindrische Vertiefung jedenfalls abschnittsweise umlaufend kontaktieren.

In einer bevorzugten Ausführungsform des erfindungsgemäßen induktiven Ladegerätes der erfindungsgemäßen Anordnung ist die Ladeplatte als Zylinder ausgeführt.

In einer bevorzugten Ausführungsform des erfindungsgemäßen induktiven Ladegerätes der erfindungsgemäßen Anordnung weist die Ladeplatte einen Absatz mit einer Höhe von mindestens 4 mm auf. Hierdurch wird vermieden, dass die regelmäßig aus dem Gehäuse eines mobilen Endgerätes hervorstehende Kamera mit der Ladeplatte kollidiert und so die Haltekraft sowie den Ladeprozess beeinträchtigt.

Ferner betrifft die Erfindung ein Verfahren zum induktiven Laden eines mobilen Endgerätes mit der erfindungsgemäßen Anordnung umfassend die Schritte:
- Einstecken des USB-Steckers des induktiven Ladegerätes in den USB-Anschluss der USB-Steckdose,
- Befestigen des zu ladenden mobilen Endgerätes an dem induktiven Ladegerät unter Ausnutzung der magnetischen Haltekraft, die zwischen dem Haltemagneten des induktiven Ladegeräts und des Akkumulators des mobilen Endgerätes wirkt,
- Starten des Ladevorgangs.

Nachfolgend ist die Erfindung unter Bezugnahme auf die beigefügten Figuren anhand diverser Ausführungsbeispiele beschrieben. Es zeigen:
- **Fig. 1:**: eine schematische perspektivische Darstellung einer Ausgestaltung einer ersten erfindungsgemäßen Anordnung,
- **Fig. 2:**: eine schematische perspektivische Darstellung einer Ausgestaltung einer zweiten erfindungsgemäßen Anordnung, und
- **Fig. 3:**: eine schematische perspektivische Darstellung einer Ausgestaltung einer dritten erfindungsgemäßen Anordnung.

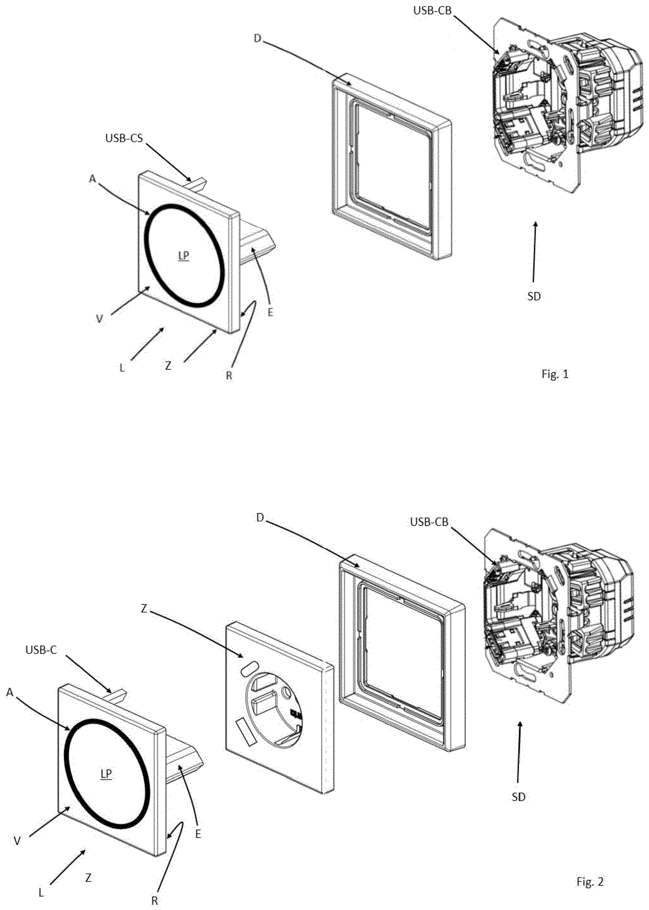

Eine in Figur 1 gezeigte erste erfindungsgemäße Anordnung umfasst eine USB-Steckdose SD ohne Zentralplatte Z sowie ein induktives Ladegerät L mit Zentralplatte, wobei die Zentralplatte Z des Ladegerätes L anstatt einer Zentralplatte Z der USB-Steckdose SD in einen Einsatz der USB-Steckdose SD eingesetzt ist (hier als Explosionsdarstellung gezeigt). Die Zentralplatte Z des Ladegerätes L ist so ausgebildet, dass sie von einem Designrahmen D umlaufend abgedeckt wird.

Der elektrische Anschluss des induktiven Ladegerätes L ist als ein, an die Rückseite R des induktiven Ladegerätes L angeformter, kabelloser USB-Stecker USB-CS (hier: USB-C) zum Einstecken in eine einen USB-Anschluss USB-CB aufweisende USB-Steckdose SD ausgeführt. Hierdurch wird auf geschickte Art und Weise die Netzteilinfrastruktur der USB-Steckdose SD ausgenutzt, um ein induktives Ladegerät zu betreiben, so dass das Ladegerät besonders flach ausgebildet ist und zudem weniger Abwärme im Bereich des zu ladenden Endgerätes erzeugt wird. Die Ladeplatte LP ist auf der Vorderseite V des induktiven Ladegerätes L angeordnet und weist einen Absatz A mit einer Höhe von mindestens 4mm, bevorzugt maximal 6mm, auf.

Durch eine solche erfindungsgemäße Anordnung wird ein echtes "wireless charging" - Erlebnis ermöglicht, das ohne Kabel auskommt. Gleichzeitig erlaubt die Ausführung des induktiven Ladegerätes L mit einem an die Rückseite R des induktiven Ladegerätes L angeformten, kabellosen USB-Stecker, ein Einstecken mit einer Hand. Zudem wird dadurch auch eine einfache Demontage ermöglicht, insbesondere, um das induktive Ladegerät L flexibel in einer anderen USB-Steckdose zu installieren. Die vorgenannten Vorteile werden dabei erreicht, ohne dass die typische Installationsgeräteanmutung beeinträchtigt wird, da die erfindungsgemäße Anordnung durch den kabellosen Stecker und den Absatz A besonders kompakt und unauffällig ist, um ein mobiles Endgerät parallel zu einer Wand- und/oder Möbeloberfläche zu laden.

Bei der in Figur 2 gezeigten zweiten erfindungsgemäßen Anordnung umfasst das Ladegerät L eine Zentralplatte Z, die die Zentralplatte Z der USB-Steckdose SD kontaktiert. Zudem weist das Ladegerät L an seiner Rückseite R einen Halteabsatz E auf, der zum Einsetzen in die topfförmige, zylindrische Vertiefung der USB-Steckdose SD geeignet ist, um die Haltekraft des Halteabsatzes E an der topfförmigen, zylindrischen Vertiefung der USB-Steckdose SD zu erhöhen, wobei der Halteabsatz E insbesondere elastische Elemente aufweist, die die topfförmige, zylindrische Vertiefung jedenfalls abschnittsweise umlaufend kontaktieren.

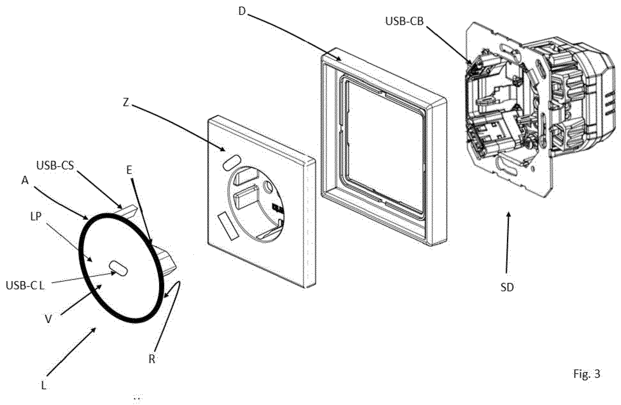

Bei der in Figur 3 gezeigten dritten, besonders kompakten und unauffälligen erfindungsgemäßen Anordnung weist das induktive Ladegerät L keine Zentralplatte Z auf. Vielmehr bildet die Ladeplatte LP selbst mit einer Höhe von ca. 4mm bis 6mm selbst (direkt) einen Absatz A zu der Zentralplatte Z. Dadurch wird sowohl beim Halten des mobilen Endgerätes parallel zu einer Wand- und/oder Möbeloberfläche als auch ohne ein Halten des mobilen Endgerätes ein optischer Eindruck vermittelt, der sich von einem typischen Installationsgerät nicht unterscheidet, da das zylindrische induktive Ladegerät LP exakt wie etablierte, bekannte Drehbedienelemente von Drehdimmern aussieht, so dass der Betrachter davon ausgeht, dass ein klassisches Installationsgerät vorliegt und kein klassisches - durch Kabel und ein bauraumbeanspruchendes Aufputzangeordnetes Netzteil den optischen Gesamteindruck beeinträchtigendes - Ladegerät, das in eine Steckdose eingesteckt ist. Des Weiteren weist die Ladeplatte LP einen USB-Anschluss USB-CL auf, der mit dem USB-Anschluss USB-CB der USB-Steckdose SD verbunden ist.

Die Erfindung ist anhand von Ausführungsbeispielen beschrieben. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen erläutert werden müsste.

### Bezugszeichenliste

- A: Absatz
- D: Designrahmen
- E: Halteabsatz
- L: induktives Ladegerät
- LP: Ladeplatte
- R: Rückseite
- SD: Steckdose
- USB-CB: USB-Anschluss
- USB-CL: USB-Anschluss
- USB-CS: USB-Stecker
- V: Vorderseite
- Z: Zentralplatte

## Patentansprüche

1. Anordnung umfassend eine, mindestens einen USB-Anschluss (USB-CB) aufweisende, USB-Steckdose (SD) und ein induktives Ladegerät (L) zum Laden eines mobilen Endgerätes umfassend eine Ladespule, die hinter einer auf der Vorderseite (V) des induktiven Ladegerätes (L) angeordneten Ladeplatte (LP) angeordnet ist, einen elektrischen Anschluss zum Anschluss an eine Energieversorgung sowie einen Haltemagneten zum Halten eines mobilen Endgerätes parallel zu einer Wand- und/oder Möbeloberfläche, wobei der elektrische Anschluss des induktiven Ladegerätes (L) als ein kabelloser, an die Rückseite (R) des induktiven Ladegerätes (L) angeformter Stecker zum Einstecken in eine einen USB-Anschluss (USB-CB) aufweisende USB-Steckdose (SD) ausgeführt ist, wobei der Stecker als USB-Stecker (USB-CS) ausgeführt ist, **dadurch gekennzeichnet, dass** das Ladegerät (L) an seiner Rückseite (R) einen Halteabsatz (E) aufweist, der zum Einsetzen in die topfförmige, zylindrische Vertiefung der USB-Steckdose (SD) geeignet ist, um die Haltekraft des Halteabsatzes an einer topfförmigen, zylindrischen Vertiefung der USB-Steckdose (SD) zu erhöhen, wobei der Halteabsatz (E) insbesondere elastische Elemente aufweist, die die topfförmige, zylindrische Vertiefung jedenfalls abschnittsweise umlaufend kontaktieren.

2. Anordnung nach Anspruch 1, **dadurch gekennzeichnet, dass** der USB-Stecker (USB-CS) als USB-C oder als USB-A-Stecker ausgeführt ist.

3. Anordnung nach Anspruch 1 oder 2, **dadurch gekennzeichnet, dass** das Ladegerät (L) eine Zentralplatte (Z) aufweist, wobei die Zentralplatte (Z) anstatt einer Zentralplatte (Z) der USB-Steckdose (SD) in einen Einsatz der USB-Steckdose (SD) eingesetzt ist.

4. Anordnung nach Anspruch 1 oder 2, **dadurch gekennzeichnet, dass** das Ladegerät (L) eine Zentralplatte (Z) der USB-Steckdose (SD) kontaktiert.

5. Anordnung nach Anspruch 4, **dadurch gekennzeichnet, dass** das Ladegerät (L) eine Zentralplatte (Z) aufweist, wobei die Zentralplatte (Z) des Ladegerätes (L) die USB-Steckdose (SD) kontaktiert.

6. Anordnung nach einem der Ansprüche 1 bis 5, **dadurch gekennzeichnet, dass** die Ladeplatte (LP) einen USB-Anschluss (USB-CL) aufweist, der mit dem USB-Anschluss (USB-CB) der USB-Steckdose (SD) verbunden ist.

7. Anordnung nach einem der Ansprüche 1 bis 6, **dadurch gekennzeichnet, dass** der USB-Stecker (USB-CS) des Ladegerätes (L) bezüglich seiner Position auf der Rückseite (R) des Ladegerätes (L) zur Erhöhung der Passgenauigkeit des Ladegerätes mit unterschiedlichen USB-Steckdosen variabel, beispielsweise über einen flexiblen Leiter, angeordnet ist.

8. Anordnung nach einem der Ansprüche 1 bis 7, **dadurch gekennzeichnet, dass** die Ladeplatte (LP) einen Absatz (A) mit einer Höhe von mindestens 4mm aufweist.

9. Anordnung nach einem der Ansprüche 1 bis 8, **dadurch gekennzeichnet, dass** die Ladeplatte (LP) als Zylinder ausgeführt ist.

10. Verfahren zum induktiven Laden eines mobilen Endgerätes mit der Anordnung gemäß einem der Ansprüche 1 bis 9 umfassend die Schritte:
- Einstecken des USB- Steckers (USB-CS) des induktiven Ladegerätes (L) in den USB-Anschluss (USB-CB) der USB-Steckdose (SD),
- Befestigen des zu ladenden mobilen Endgerätes an dem induktiven Ladegerät (L) unter Ausnutzung der magnetischen Haltekraft, die zwischen dem Haltemagneten des induktiven Ladegeräts (L) und des Akkumulators des mobilen Endgerätes wirkt,
- Starten des Ladevorgangs.

## Claims

1. Arrangement comprising a USB socket (SD) with at least one USB port (USB-CB) and an inductive charger (L) for charging a mobile terminal device, comprising a charging coil arranged behind a charging plate (LP) located on the front (V) of the inductive charger (L), an electrical connection for connection to a power supply, and a holding magnet for holding a mobile terminal device parallel to a wall and/or furniture surface, wherein the electrical connection of the inductive charger (L) is designed as a wireless plug moulded onto the rear side (R) of the inductive charger (L) for insertion into a USB socket (SD) providing a USB port (USB-CB), wherein the plug is designed as a USB plug (USB-CS), **characterised in that** the charger (L) has a retaining shoulder (E) on its rear side (R), which is suitable for insertion into the pot-shaped, cylindrical recess of the USB socket (SD) in order to increase the holding force of the retaining shoulder on a pot-shaped, cylindrical recess of the USB socket (SD), wherein the retaining shoulder (E) in particular has elastic elements which make contact with the pot-shaped, cylindrical recess at least in sections around its circumference.

2. Arrangement according to claim 1, **characterised in that** the USB plug (USB-CS) is designed as a USB-C or USB-A plug.

3. Arrangement according to claim 1 or 2, **characterised in that** the charger (L) has a central plate (Z), wherein the central plate (Z) is inserted into an insert of the USB socket (SD) instead of a central plate (Z) of the USB socket (SD).

4. Arrangement according to claim 1 or 2, **characterised in that** the charger (L) contacts a central plate (Z) of the USB socket (SD).

5. Arrangement according to claim 4, **characterised in that** the charger (L) has a central plate (Z), wherein the central plate (Z) of the charger (L) contacts the USB socket (SD).

6. Arrangement according to any of claims 1 to 5, **characterised in that** the charging plate (LP) has a USB port (USB-CL) which is connected to the USB port (USB-CB) of the USB socket (SD).

7. Arrangement according to any of claims 1 to 6, **characterised in that** the USB plug (USB-CS) of the charger (L), with respect to its position on the rear side (R) of the charger (L), is variably arranged, for example via a flexible conductor, in order to increase the accuracy of fit of the charger with different USB sockets.

8. Arrangement according to any of claims 1 to 7, **characterised in that** the loading plate (LP) has a step (A) with a height of at least 4 mm.

9. Arrangement according to any of claims 1 to 8, **characterised in that** the loading plate (LP) is designed as a cylinder.

10. Method for inductively charging a mobile terminal device with the arrangement according to any of claims 1 to 9, comprising the steps:
Inserting the USB plug (USB-CS) of the inductive charger (L) into the USB port (USB-CB) of the USB socket (SD)
- Attaching the mobile terminal device to be charged to the inductive charger (L) using the magnetic holding force acting between the holding magnet of the inductive charger (L) and the battery of the mobile terminal device,
- Starting the charging process.

## Revendications

1. Dispositif comprenant une prise USB (SD) comportant au moins un port USB (USB-CB) et un chargeur inductif (L) pour charger un terminal mobile, comprenant une bobine de charge disposée derrière une plaque de charge (LP) située à l'avant (V) du chargeur inductif (L), un raccordement électrique pour le raccordement à une alimentation en énergie, ainsi qu'un aimant de maintien pour maintenir un terminal mobile parallèlement à une surface de mur et/ou de meuble, le raccordement électrique du chargeur inductif (L) étant réalisé sous la forme d'une fiche sans fil moulée à l'arrière (R) du chargeur inductif (L) pour être enfichée dans une prise USB (SD) comportant un port USB (USB-CB), la fiche étant conçue comme une fiche USB (USB-CS), **caractérisé en ce que** le chargeur (L) comporte, sur sa face arrière (R), un épaulement de retenue (E) qui est adapté pour être inséré dans le renfoncement cylindrique en forme de pot de la prise USB (SD) afin d'augmenter la force de retenue de l'épaulement de retenue sur un renfoncement cylindrique en forme de pot de la prise USB (SD), l'épaulement de retenue (E) comportant en particulier des éléments élastiques qui sont en contact avec le renfoncement cylindrique en forme de pot, au moins par sections sur tout le pourtour.

2. Dispositif selon la revendication 1, **caractérisé en ce que** la fiche USB (USB-CS) est conçue comme une fiche USB-C ou USB-A.

3. Dispositif selon la revendication 1 ou 2, **caractérisé en ce que** le chargeur (L) comporte une plaque centrale (Z), la plaque centrale (Z) étant insérée dans un insert de la prise USB (SD) à la place d'une plaque centrale (Z) de la prise USB (SD).

4. Dispositif selon la revendication 1 ou 2, **caractérisé en ce que** le chargeur (L) est en contact avec une plaque centrale (Z) de la prise USB (SD).

5. Dispositif selon la revendication 4, **caractérisé en ce que** le chargeur (L) comporte une plaque centrale (Z), la plaque centrale (Z) du chargeur (L) étant en contact avec la prise USB (SD).

6. Dispositif selon l'une quelconque des revendications 1 à 5, **caractérisé en ce que** la plaque de chargement (LP) comporte un port USB (USB-CL) qui est relié au port USB (USB-CB) de la prise USB (SD).

7. Dispositif selon l'une quelconque des revendications 1 à 6, **caractérisée en ce que** la fiche USB (USB-CS) du chargeur (L), par rapport à sa position à l'arrière (R) du chargeur (L), est disposée de manière variable, par exemple au moyen d'un conducteur flexible, afin d'augmenter la précision d'ajustage du chargeur avec différentes prises USB.

8. Dispositif selon l'une quelconque des revendications 1 à 7, **caractérisé en ce que** la plaque de chargement (LP) présente un rebord (A) d'une hauteur d'au moins 4 mm.

9. Dispositif selon l'une quelconque des revendications 1 à 8, **caractérisé en ce que** la plaque de chargement (LP) est réalisée sous forme de cylindre.

10. Procédé de chargement inductif d'un terminal mobile avec le dispositif selon l'une quelconque des revendications 1 à 9, comprenant les étapes suivantes:
- Brancher la fiche USB (USB-CS) du chargeur inductif (L) dans le port USB (USB-CB) de la prise USB (SD),
- Fixer le terminal mobile à charger sur le chargeur inductif (L) en utilisant la force de retenue magnétique qui agit entre l'aimant de retenue du chargeur inductif (L) et l'accumulateur du terminal mobile,
- Démarrer le processus de charge.
